# FASCICULE DE BREVET EUROPEEN

(11) **EP 2 196 374 B1**
(45) Date de publication et mention de la délivrance du brevet: **03.07.2013**
(21) Numéro de dépôt: 09306217.2
(22) Date de dépôt: 11.12.2009
(51) Int. Cl.: B61D 17/02, B61D 17/08, B61F 5/52

(54) **Caisse de véhicule ferroviaire comprenant des panneaux pivotants**
Wagenkasten eines Schienenfahrzeugs mit schwenkbaren Klappen
Railway vehicle body with pivotable panels

(30) Priorité: 15.12.2008 FR 0858571
(43) Date de publication de la demande: 16.06.2010
(73) Titulaire: ALSTOM Transport SA, 92300 Levallois-Perret (FR)
(72) Inventeur: Le Breton, Frédéric, 59260 Lezennes (FR); Chavanel, Fabrice, 59000 Lille (FR)
(74) Mandataire: Domenego, Bertrand

(56) Documents cités:
- DE-A1- 2 542 779
- DE-C- 726 181
- DE-C- 948 518
- DE-C- 952 910

## Description

La présente invention concerne une caisse de véhicule ferroviaire du type comprenant deux parois longitudinales solidaires d'un plancher, lesdites parois longitudinales comprenant chacune une partie s'étendant en regard dudit plancher en regard des équipements du véhicule ferroviaire fixés sous le plancher, chaque paroi longitudinale comprenant au moins une ouverture s'étendant longitudinalement au moins dans sa partie s'étendant sous le plancher, ladite ouverture étant fermée par au moins un panneau monté en rotation sur la paroi longitudinale de sorte à pouvoir pivoter autour d'un axe longitudinal par rapport à ladite paroi longitudinale..

L'invention concerne également un véhicule ferroviaire comprenant au moins une telle caisse.

Document DE 948 518 divulgue une caisse avec ces caractéristiques et un véhicule ferroviaire.

Dans les véhicules ferroviaires, par exemple de type tramway, il est connu de prévoir des bogies pivotant par rapport à la caisse du véhicule afin de suivre les tracés de voies lorsque le véhicule ferroviaire circule. Les bogies pivotants sont susceptibles de « déborder » de la partie courante de la caisse au cours de leur rotation, c'est-à-dire de faire saillie au-delà des parois longitudinales.

Ces parois sont donc pourvues d'ouvertures en regard des bogies afin de permettre ce débordement des bogies lors des passages en courbe. Afin de masquer les bogies, il est connu de solidariser des jupes aux bogies. Ces jupes sont disposées dans les ouvertures prévues dans les parois et tournent avec les bogies. Ces jupes tentent de conférer un esthétisme particulier au véhicule ferroviaire et de prévenir les actes de vandalisme qui peuvent survenir lorsque des organes fonctionnels d'un véhicule ferroviaire sont visibles depuis l'extérieur du véhicule.

Une partie de la paroi longitudinale fixée sur caisse s'étendant au-dessus de la jupe fixée sur bogie est rendue mobile en rotation de sorte à former un volet permettant l'accès aux équipements disposés sous le plancher pour des opérations de maintenance.

Un jeu de débattement est prévu entre la jupe fixée sur bogie et le reste de la paroi longitudinale de la caisse, ce jeu est généralement de l'ordre de 120 mm et permet le déplacement en rotation de la jupe par rapport à la paroi longitudinale et les déplacements nécessaires de la caisse par rapport au bogie.

Une telle réalisation n'est pas satisfaisante car la présence du jeu n'est pas esthétique du fait qu'il ne permet pas de conférer un aspect de continuité entre la paroi longitudinale et la jupe. En outre, des fuites de bruit se produisent par ce jeu. Enfin, la présence d'une partie pivotante au-dessus de la jupe pour permettre la maintenance complique la réalisation du véhicule ferroviaire par la multiplication des panneaux et est susceptible de réduire encore l'esthétisme du véhicule. De plus le jeu de 120 mm ne permet pas de prévenir les actes de vandalisme.

L'un des buts de l'invention est de pallier ces inconvénients en proposant une caisse de véhicule ferroviaire permettant le passage d'éléments rotatifs susceptibles de déborder de la caisse offrant une esthétique satisfaisante et réduisant les fuites de bruit vers l'extérieur.

A cet effet, l'invention concerne une caisse de véhicule ferroviaire du type précité dans laquelle l'ouverture est fermée par deux panneaux consécutifs, chaque panneau étant monté en rotation sur la paroi longitudinale de sorte à pouvoir pivoter autour d'un axe longitudinal par rapport à ladite paroi longitudinale.

Les panneaux permettent d'assurer la continuité des parois longitudinales, y compris dans les ouvertures permettant le passage d'éléments rotatifs. Cette continuité confère une esthétique satisfaisante et permet de diminuer les fuites de bruits vers l'extérieur. L'invention simplifie en outre la réalisation de la caisse, les panneaux permettant l'accès aux équipements disposés sous le plancher pour des opérations de maintenance, ce qui limite le nombre de pièces formant la caisse. Les panneaux permettent en outre de masquer les éléments sous le plancher, ce qui réduit les risques de vandalisme.

Selon d'autres caractéristiques de la caisse de véhicule ferroviaire :
- le panneau est articulé au moyen d'au moins une charnière, ladite charnière comprenant des moyens de rappel agencés pour ramener le panneau dans la continuité de la paroi longitudinale après une rotation dudit panneau ;
- la caisse de véhicule ferroviaire comprend des moyens de limitation angulaire de la rotation du panneau, de sorte que l'amplitude de rotation du panneau est limitée ;
- la caisse de véhicule ferroviaire est équipée d'au moins un bogie s'étendant sous le plancher de la caisse, les ouvertures prévues dans les parois longitudinales s'étendant sensiblement en regard dudit bogie ;
- le bogie est monté en rotation par rapport au plancher, autour d'un axe sensiblement perpendiculaire audit plancher, la rotation dudit bogie entraînant un déplacement d'au moins un des panneaux des parois longitudinales ; et
- le bogie comprend deux patins de contact disposés chacun en regard d'une ouverture prévue dans les parois longitudinales, lesdits patins étant chacun agencés pour venir en contact contre le panneau correspondant afin d'entraîner son déplacement.

L'invention concerne également un véhicule ferroviaire comprenant au moins une caisse telle que décrite ci-dessus.

Ce véhicule ferroviaire est par exemple un tramway.

D'autres aspects et avantages de l'invention apparaîtront à la lecture de la description qui suit, donnée à titre d'exemple et faite en référence aux dessins annexés, dans lesquels :
- la Fig. 1 est une représentation schématique de face d'une paroi longitudinale d'une caisse de véhicule ferroviaire selon l'invention,
- la Fig. 2 est une représentation schématique en perspective, en perspective montrant l'action d'une partie d'un bogie sur un panneau de la caisse de véhicule ferroviaire selon l'invention,

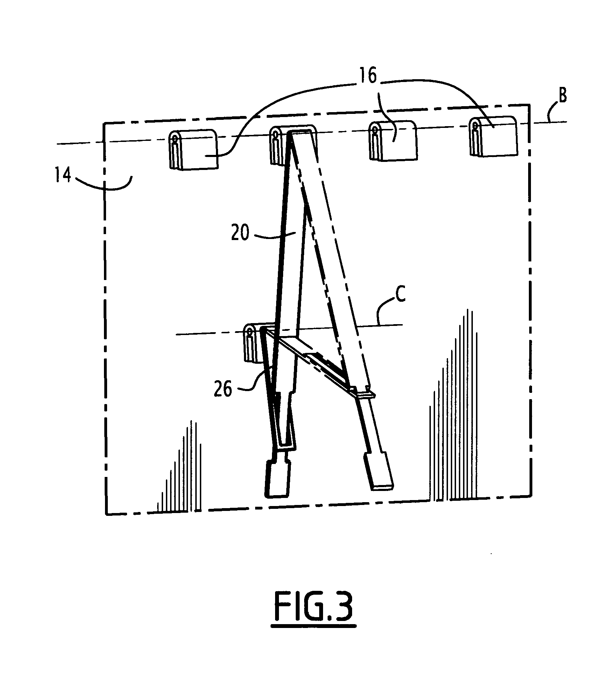

- la Fig. 3 est une représentation schématique de l'intérieur d'un panneau de caisse selon l'invention.

Dans la description, le terme « longitudinal » est défini selon la direction dans laquelle s'étend une caisse de véhicule ferroviaire correspondant à sa largeur, les terme « transversal » est défini selon une direction sensiblement perpendiculaire à la direction longitudinal et correspondant à la largeur de la caisse.

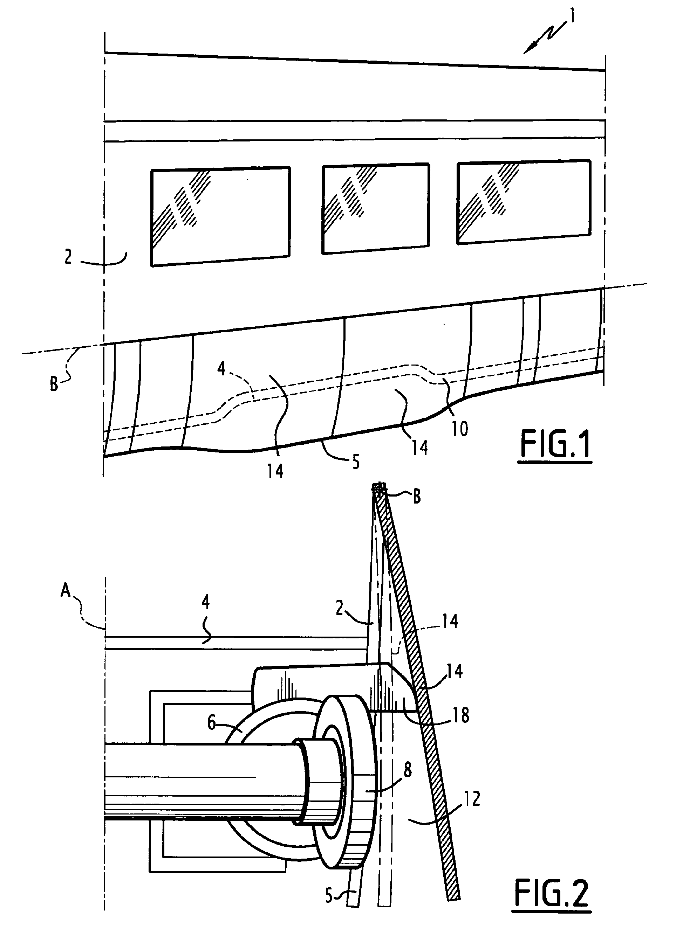

En référence à la Fig. 1, on décrit une caisse 1 de véhicule ferroviaire, par exemple du type tramway, comprenant deux parois longitudinales 2 (une seule étant représentée) s'étendant parallèlement l'une à l'autre sur toute la longueur de la caisse et disposées de part et d'autre d'un plancher 4 (représenté en pointillés sur la Fig. 1) et solidaires de celui-ci.

Une partie des équipements du véhicule ferroviaire sont montés sous le plancher 4 et les parois longitudinales 2 sont agencées pour s'étendre en regard de ces équipements afin de les masquer. Ainsi, les parois 2 comprennent chacune une partie 5 s'étendant sous le plancher au moins dans certaines zones du véhicule ferroviaire.

Le véhicule ferroviaire comprend en particulier au moins un bogie 6 équipé, supportant les roues 8 du véhicule ferroviaire. Ce bogie 6 est partiellement représenté sur la Fig. 2. Le bougie 6 est monté sous le plancher 4, par exemple sous une partie surélevée 10 de celui-ci. Le bogie 6 est monté en rotation par rapport à un axe A sensiblement perpendiculaire au plancher, c'est-à-dire un axe sensiblement vertical. Ainsi, le bogie 6 peut tourner pour suivre les tracés de voies lorsque le véhicule ferroviaire circule. Lorsque le bogie 6 tourne, il est susceptible de déborder de la caisse de véhicule ferroviaire 1, c'est-à-dire de s'étendre en partie au-delà des parois longitudinales 2 selon une direction transversale, comme cela est représenté sur la Fig. 2.

Pour permettre le passage du bogie 6 au-delà des parois 2, celles-ci comprennent chacune une ouverture 12 en regard du bogie 6. Cette ouverture 12 s'étend sensiblement longitudinalement au moins dans la partie 5 de la paroi 2 s'étendant sous le plancher 4. Selon le mode de réalisation représenté sur les figures, l'ouverture 12 s'étend dans la partie 5 et se prolonge au-dessus du plancher 4. Les ouvertures 12 permettent ainsi le débordement du bogie 6 d'un côté et de l'autre de la caisse 1 lors des passages en courbe.

Afin de fermer les ouvertures 12, notamment pour masquer les équipements sous le plancher et pour diminuer les fuites de bruit vers l'extérieur, la caisse 1 comprend au moins un panneau 14 pour chaque ouverture 12. Ce panneau 14 s'étend longitudinalement et ferme l'ouverture 12. Il est monté en rotation sur la paroi longitudinale 2 de sorte qu'il peut pivoter autour d'un axe B longitudinal par rapport à la paroi 2 sur laquelle il est monté. Selon le mode de réalisation représenté sur les figures, chaque ouverture 12 est fermée par deux panneaux 14 longitudinaux adjacents, chaque panneau 14 étant monté en rotation autour de l'axe B.

Lorsque le bogie 6 est dans sa position normale, c'est-à-dire qu'il n'est pas tourné par rapport au plancher 4 et qu'il s'étend à l'intérieur de la caisse sans déborder de celle-ci, les panneaux 14 s'étendent dans la continuité des parois longitudinales 2 et confèrent à la caisse 1 un aspect extérieur esthétiquement satisfaisant, c'est-à-dire sans ouverture débouchant vers l'extérieur de la caisse 1.

Les panneaux 14 sont fixés par l'intermédiaire de charnières 16 sur les parois longitudinales 12.

Ainsi, lorsque le bogie 6 tourne, il prend appui contre au moins un des panneaux 14 et entraîne sa rotation vers l'extérieur de la caisse 1, ce qui autorise le passage du bogie 6 par l'ouverture 12 et permet le débordement de ce bogie 6 de la caisse 1. L'appui du bogie 6 sur le panneau 14 se fait par un patin de contact 18 fixé sur un côté du bogie 6 et agencé pour prendre appui contre le panneau 14 lors de la rotation du bogie. Le bogie 6 comprend donc deux patins de contact 18 disposés chacun en regard d'une ouverture 12 prévue dans les parois longitudinales 2 de chaque côté du bogie 6. Ces patins 18 sont agencés pour prendre appui sur les panneaux 14 sans choc afin d'éviter la détérioration du panneau 14 et/ou du bogie 6. A cet effet, les patins 18 sont par exemple recouverts d'un matériau souple, du type caoutchouc ou autre.

Les charnières 16 comprennent des moyens de rappel agencés pour ramener le panneau dans la continuité de la paroi longitudinale 2 après une rotation dudit panneau. Ainsi, lorsque le bogie 6 retourne dans sa position normale après avoir fait pivoter un panneau 14, celui-ci revient dans sa position initiale dans la continuité du panneau longitudinal 2 correspondant. Lorsque le bogie 6 prend appui contre un panneau 14, il fait pivoter celui-ci vers l'extérieur de la caisse 1 et contraint les moyens de rappel. Lorsque le bogie 6 retourne dans sa position normale, les moyens de rappel ramènent ainsi le panneau 14 dans sa position initiale.

La caisse 1 comprend en outre des moyens de limitation angulaire 20 et 26 de la rotation du panneau 14, de sorte que l'amplitude de rotation du panneau 14 vers l'extérieur de la caisse 1 est limitée. Les moyens sont formés par un bras 20 monté en rotation par rapport à la caisse autour de l'axe longitudinal B et par une pièce 26 fixée à la caisse et montée en rotation autour d'un axe C longitudinal parallèle à l'axe B. Le bras 20 passe par une ouverture prévue dans la pièce 26 qui assure une limitation de l'ouverture.

Selon un autre mode de réalisation, les charnières 16 sont agencées pour assurer la limitation de l'ouverture, ce qui permet de supprimer le bras 20 et la pièce 26.

Le fait de limiter le débattement du panneau 14 empêche l'accès au bogie 6 depuis l'extérieur des panneaux 14, ce qui prévient les risques de vandalisme sur les équipements situés derrière les panneaux 14.

La caisse de véhicule ferroviaire décrite ci-dessus permet de conférer au véhicule ferroviaire un aspect esthétique satisfaisant tout en autorisant une rotation du bogie au-delà de la caisse. En effet, la caisse 1 présente une continuité entre les parois longitudinales 2 et les panneaux pivotants 14. De plus, les panneaux pivotant 14 permettent de s'affranchir du jeu habituellement prévu entre les jupes solidaires du bogie et les parois longitudinales, ce qui limite les fuites de bruit vers l'extérieur. Enfin, les panneaux permettent d'empêcher les actes de vandalismes sur les équipements situés sous le plancher du véhicule ferroviaire.

## Revendications

1. Caisse (1) de véhicule ferroviaire du type comprenant deux parois longitudinales (2) solidaires d'un plancher (4), lesdites parois longitudinales (2) comprenant chacune une partie (5) s'étendant en regard dudit plancher (4) en regard des équipements du véhicule ferroviaire fixés sous le plancher (4), chaque paroi longitudinale (2) comprenant au moins une ouverture (12) s'étendant longitudinalement au moins dans sa partie (5) s'étendant sous le plancher (4), ladite ouverture (12) étant fermée par au moins un panneau (14) monté en rotation sur la paroi longitudinale (2) de sorte à pouvoir pivoter autour d'un axe longitudinal (B) par rapport à ladite paroi longitudinale (2), **caractérisée en ce que** l'ouverture (12) est fermée par deux panneaux (14) consécutifs, chaque panneau (14) étant monté en rotation sur la paroi longitudinale (2) de sorte à pouvoir pivoter autour d'un axe longitudinal (B) par rapport à ladite paroi longitudinale (2).

2. Caisse de véhicule ferroviaire selon la revendication 1, **caractérisée en ce que** le panneau (14) est articulé au moyen d'au moins une charnière (16), ladite charnière (16) comprenant des moyens de rappel agencés pour ramener le panneau (14) dans la continuité de la paroi longitudinale (2) après une rotation dudit panneau (14).

3. Caisse de véhicule ferroviaire selon la revendication 1 ou 2, **caractérisée en ce qu'**elle comprend des moyens de limitation angulaire (20, 26, 16) de la rotation du panneau (14), de sorte que l'amplitude de rotation du panneau (14) est limitée.

4. Caisse de véhicule ferroviaire selon l'une quelconque des revendications 1 à 3, **caractérisée en ce qu'**elle est équipée d'au moins un bogie (6) s'étendant sous le plancher (4) de la caisse (1), les ouvertures (12) prévues dans les parois longitudinales (2) s'étendant sensiblement en regard dudit bogie (6).

5. Caisse de véhicule ferroviaire selon la revendication 4, **caractérisée en ce que** le bogie (6) est monté en rotation par rapport au plancher (4), autour d'un axe (A) sensiblement perpendiculaire audit plancher (4), la rotation dudit bogie (6) entraînant un déplacement d'au moins un des panneaux (14) des parois longitudinales (2).

6. Caisse de véhicule ferroviaire, selon la revendication 5, **caractérisée en ce que** le bogie (6) comprend deux patins de contact (18) disposés chacun en regard d'une ouverture (12) prévue dans les parois longitudinales (2), lesdits patins (18) étant chacun agencés pour venir en contact contre le panneau (14) correspondant afin d'entraîner son déplacement.

7. Véhicule ferroviaire comprenant au moins une caisse (1) selon l'une quelconque des revendications 1 à 6.

## Patentansprüche

1. Karosserie (1) für ein Eisenbahnfahrzeug, des Typs aufweisend zwei Längswände (2), die mit einem Boden (4) verbunden sind, wobei die Längswände (2) jeweils einen Teil (5) aufweisen, der sich hinsichtlich des Bodens (4) gegenüberliegend von fixen Betriebseinrichtungen des Eisenbahnfahrzeugs unterhalb des Bodens (4) erstreckt, wobei jede Längswand (2) wenigstens eine Öffnung (12) aufweist, die sich wenigstens in ihrem Teil (5), der sich unterhalb des Bodens (4) erstreckt, längs erstreckt, wobei die Öffnung (12) von wenigstens einer Platte (14) verschlossen ist, die an der Längswand (2) drehbar angebracht ist, sodass sie bezüglich der Längswand (2) um eine Längsachse (B) schwenken kann, **dadurch gekennzeichnet, dass** die Öffnung (12) von zwei aufeinanderfolgenden Platten (14) verschlossen ist, wobei jede Platte (14) an der Längswand (2) drehbar angebracht ist, sodass sie bezüglich der Längswand (2) um eine Längsachse (B) rotieren kann.

2. Karosserie für ein Eisenbahnfahrzeug gemäß Anspruch 1, **dadurch gekennzeichnet, dass** die Platte (14) mittels wenigstens eines Gelenks (16) gelenkig angebracht ist, wobei das Gelenk (16) Rückstellmittel aufweist, die eingerichtet sind zum Rückstellen der Platte (14) in Bündigkeit mit der Längswand (2) nach einer Drehung der Platte (14).

3. Karosserie für ein Eisenbahnfahrzeug gemäß Anspruch 1 oder 2, **dadurch gekennzeichnet, dass** sie Mittel zum Begrenzen des Winkels (20, 26, 16) der Drehung der Platte (14) aufweist, sodass die Weite der Drehung der Platte (14) begrenzt ist.

4. Karosserie für ein Eisenbahnfahrzeug gemäß irgendeinem der Ansprüche 1 bis 3, **dadurch gekennzeichnet, dass** sie mit wenigstens einem Drehgestell (6) ausgestattet ist, das sich unterhalb des Bodens (4) der Karosserie (1) erstreckt, wobei die Öffnungen (12) in den Längswänden (2) sich im Wesentlichen dem Drehgestell (6) gegenüberliegend erstreckend vorgesehen sind.

5. Karosserie für ein Eisenbahnfahrzeug gemäß Anspruch 4, **dadurch gekennzeichnet, dass** das Drehgestell (6) bezüglich des Bodens (4) drehbar montiert ist um eine Achse (A), die im Wesentlichen senkrecht zum Boden (4) ist, wobei die Drehung des Drehgestells (6) eine Verlagerung von wenigstens einer der Platten (14) der Längswände (2) veranlasst.

6. Karosserie für ein Eisenbahnfahrzeug gemäß Anspruch 5, **dadurch gekennzeichnet, dass** das Drehgestell (6) zwei Kontaktschuhe (18) aufweist, die jeweilig einer Öffnung (12) gegenüberliegen, die in den Längswänden (2) vorgesehen sind, wobei die Schuhe (18) jeweils eingerichtet sind, um gegen die Platte (14) in Kontakt zu kommen, um entsprechend deren Verlagerung zu veranlassen.

7. Eisenbahnfahrzeug mit wenigstens einer Karosserie (1) gemäß irgendeinem der Ansprüche 1 bis 6.

## Claims

1. Railway vehicle body (1) of the type comprising two longitudinal walls (2) which are integral with a floor (4), said longitudinal walls (2) each comprising a part (5) which extends opposite said floor (4) opposite railway vehicle equipment fixed under the floor (4), each longitudinal wall (2) comprising at least one opening (12) which extends longitudinally at least in the part (5) thereof which extends under the floor (4), said opening (12) being closed by at least one panel (14) which is mounted in rotation on the longitudinal wall (2) so as to be able to pivot about a longitudinal axis (B) relative to said longitudinal wall (2), **characterised in that** the opening (12) is closed by two consecutive panels (14), each panel (14) being mounted in rotation on the longitudinal wall (2) so as to be able to pivot about a longitudinal axis (B) relative to said longitudinal wall (2).

2. Railway vehicle body according to claim 1, **characterised in that** the panel (14) is articulated by means of at least one hinge (16), said hinge (16) comprising restoring means which are provided in order to return the panel (14) into the continuity of the longitudinal wall (2) after a rotation of said panel (14).

3. Railway vehicle body according to claim 1 or 2, **characterised in that** it comprises means for angular limitation (20, 26, 16) of the rotation of the panel (14) so that the amplitude of rotation of the panel (14) is limited.

4. Railway vehicle body according to any of the claims 1 to 3, **characterised in that** it is equipped with at least one bogie (6) which extends under the floor (4) of the body (1), the openings (12) which are provided in the longitudinal walls (2) extending substantially opposite said bogie (6).

5. Railway vehicle body according to claim 4, **characterised in that** the bogie (6) is mounted in rotation relative to the floor (4) about an axis (A) which is substantially perpendicular to said floor (4), the rotation of said bogie (6) bringing about a displacement of at least one of the panels (14) of the longitudinal walls (2).

6. Railway vehicle body according to claim 5, **characterised in that** the bogie (6) comprises two contact shoes (18), which are each disposed opposite an opening (12) which is provided in the longitudinal walls (2), said shoes (18) each being provided in order to come into contact against the corresponding panel (14) so as to bring about the displacement thereof.

7. Railway vehicle comprising at least one body (1) according to any of the claims 1 to 6.
